# EUROPÄISCHE PATENTANMELDUNG

(11) **EP 0 994 553 A1**
(43) Veröffentlichungstag der Anmeldung: **19.04.2000**
(21) Anmeldenummer: 99118218.9
(22) Anmeldetag: 14.09.1999
(51) Int. Cl.: H02K 7/08, A47C 20/04, A47B 9/00

(54) **Elektromotorischer Möbelantrieb**

(30) Priorität: 12.10.1998 DE 29818204 U
(71) Anmelder: Dewert Antriebs- und Systemtechnik GmbH & Co. KG, D-32278 Kirchlengern (DE)
(72) Erfinder: Bokämper, Ralf, 32312 Lübbecke (DE); Roither, Andreas, 33647 Bielefeld (DE)
(74) Vertreter: Stracke, Alexander, Dipl.-Ing.

(57) **Zusammenfassung**

Ein elektromotorischer Möbelantrieb, der mit einem von einem Motor antreibbaren Schneckengetriebe ausgerüstet ist, soll in äußerst einfacher Weise so gestaltet werden, daß die Durchbiegung des Motorzapfens oder der Schneckenwelle zumindest deutlich verringert wird.

Erfindungsgemäß ist die Schnecke (10) des Schneckengetriebes von einem in das Getriebegehäuse (13) eingesetzten Stützkörper (14) schließend umgeben, und dieser Stützkörper (14) ist mit einer Eingriffsöffnung für das Schneckenrad (11) versehen. Der Stützkörper (14) hat eine zylindrische Grundform und ist form- und/oder kraftschlüssig in eine Bohrung des Getriebegehäuses (13) eingesetzt.

Der erfindungsgemäße Möbelantrieb ist besonders für solche Möbel geeignet, bei denen das zum Verstellen eines Bauteiles notwendige Drehmoment relativ gering ist.

## Beschreibung

Die Erfindung betrifft einen elektromotorischen Möbelantrieb mit einem von einem Motor antreibbaren Schneckengetriebe, welches im wesentlichen aus einer Schnecke, einem damit in Eingriff stehenden Schneckenrad und einem Getriebegehäuse besteht.

Bei dem in Frage kommenden elektromotorischen Möbelantrieb handelt es sich um einen Kleinstantrieb, der für Möbel mit verstellbaren Möbelbauteilen, für Pflegebetten, Krankenhausbetten und dergleichen verwendet wird. Die Schnecke wird entweder drehfest auf den Motorzapfen des Antriebsmotors aufgesetzt oder der Motorzapfen wird zur Reduzierung der Abmessungen als Schnecke ausgebildet. Aufgrund der Geometrie der Schnecke und des Schneckenrades kommt es zu relativ hohen Verzahnungskräften, die bei entsprechen hohen Belastungen zu einer Durchbiegung des Motorzapfens führen, so daß die dadurch sich verringernde Überdeckung der Schnecke und des Schneckenrades zu einem erhöhten Verschleiß führt. Insbesondere werden die Flanken des Schneckenrades abgenutzt oder es kommt zu einem Bruch des Motorzapfens, so daß der Möbelantrieb repariert oder durch einen neuen Antrieb ersetzt werden muß.

Der Erfindung liegt die Aufgabe zugrunde, einen elektromotorischen Möbelantrieb der eingangs näher beschriebenen Art in äußerst einfacher Weise so auszubilden, daß die durch die Durchbiegung des Motorzapfens oder der Schneckenwelle zumindest deutlich verringert wird.

Die gestellte Aufgabe wird gelöst, indem die Schnecke von einem in das Getriebegehäuse eingesetzten Stützkörper schließend umgeben ist, der mit einer Eingriffsöffnung für das Schneckenrad versehen ist.

Der Stützkörper kann aus einem geeigneten Material bestehen, um die Reibung so gering wie möglich zu halten. Der Stützkörper verhindert ein Durchbiegen der Schneckenwelle oder des Motorzapfens. Dadurch steht die Schnecke optimal mit den Flanken des Schneckenrades in Eingriff, so daß der Verschleiß deutlich verringert wird. Die Eingriffsöffnung ermöglicht, daß die Schneckenwindungen mit den Zähnen des Schneckenrades in Eingriff kommen.

In weiterer Ausgestaltung ist vorgesehen, daß der Stützkörper in seiner Grundform zylindrisch ausgebildet ist und form- und/oder kraftschlüssig in eine Bohrung des Getriebegehäuses eingesetzt ist. Bei Möbelantrieben besteht die Forderung, daß der gesamte Antrieb selbsthemmend ist, damit ein angeschlossenes Möbelbauteil nach dem Abschalten des Motors in jeder Stellung verbleibt. Bei dem Möbelantrieb wird im Normalfall von dem Schneckenrad eine Spindel angetrieben, auf die eine Spindelmutter aufgesetzt ist. Sofern diese Spindel nicht selbsthemmend ist, dies aber gewünscht wird, ist vorgesehen, daß der den Motor zugewandte Endbereich des Stützkörpers mit mehreren Schlitzen versehen ist. Dadurch werden verformbare Zungen geschaffen. Dieser Endbereich ist außerdem mit einer äußeren Nut für einen Federring versehen. Dieser Federring übt eine genau zu definierende, konstante Reibkraft auf den Motorzapfen aus. Dadurch wird ein selbsthemmender Möbelantrieb geschaffen, wenn dieser ansonsten nicht selbsthemmend ist. Der Stützkörper läßt sich in einfachster Weise herstellen, wenn er als Kunststoffspritzgußteil ausgebildet ist.

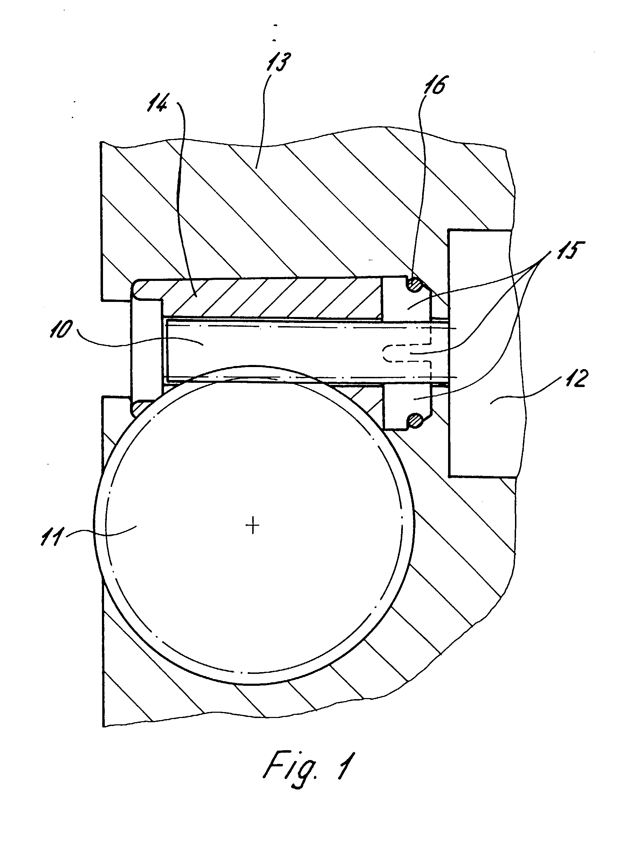

Anhand der beiliegenden Zeichnung wird die Erfindung noch näher erläutert. Es zeigt
- Figur 1: den Schneckentrieb eines erfindungsgemäßen Möbelantriebes in Schnittdarstellung.

Aus Gründen der vereinfachten Darstellung ist von dem erfindungsgemäßen Möbelantrieb nur der Schneckentrieb dargestellt. Die Schnecke 10 steht in bekannter Weise mit dem Schneckenrad 11 in Eingriff und wird von einem Motor 12 vorzugsweise einem Lüftermotor angetrieben. Im dargestellten Ausführungsbeispiel ist der Abtriebszapfen oder der Motorzapfen als Schnecke ausgebildet. Im Gegensatz zu dieser Ausführung ist es ebenfalls denkbar, daß eine Schnecke 10 auf den Abtriebszapfen aufgesetzt ist. In eine Bohrung des Getriebegehäuses 13 ist ein zylindrischer Stützkörper 14 form- und/oder kraftschlüssig eingesetzt. Dieser Stützkörper 14 ist mit einer Eingriffsöffnung für das Schneckenrad 11 versehen. Diese Eingriffsöffnung ist schlitzartig ausgebildet. An dem dem Motor 12 zugewandten Endbereich ist der Stützkörper 14 mit vier um einen Winkel von jeweils 90° zueinander versetzten Längsschlitzen 15 versehen, so daß dieser Endbereich nachgiebig ist. Außerdem ist in einem geringen Abstand zum Stirnende dieser Endbereich mit einer äußeren Nut versehen, in der ein Federring 16 liegt. Durch diesen Federring 16 wird eine konstante, durch den Federring 16 zu bestimmende Reibkraft auf die in diesem Bereich glattflächige Motorwelle bzw. auf den Motorzapfen übertragen, so daß der ansonsten nicht selbsthemmende Möbelantrieb selbsthemmend wird. Der gegenüberliegende Endbereich des Stützkörpers 14 ist mit einer Aussparung oder Ausdrehung versehen. Die Figur 1 zeigt, daß die Bohrung des Stützkörpers 14 so groß ist, daß die Schnecke 10 schließend darin eingreift. Aus der Figur 1 ergibt sich ferner noch, daß die äußere Kontur des Stützkörpers 14 ein Konus ist, wobei der größte Durchmesser dem Motor 12 zugewandt liegt. Dadurch läßt er sich besonders fest in das Getriebegehäuse 13 einsetzen.

## Patentansprüche

1. Elektromotorischer Möbelantrieb mit einem von einem Motor antreibbaren Schneckengetriebe, welches im wesentlichen aus einer Schnecke, einem damit in Eingriff stehenden Schneckenrad und einem Getriebegehäuse besteht, **dadurch gekennzeichnet,** daß die Schnecke (10) von einem in das Getriebegehäuse (13) eingesetzten Stützkörper (14) schließend umgeben ist, der mit einer Eingriffsöffnung (1) für das Schneckenrad (11) versehen ist.

2. Elektromotorischer Möbelantrieb nach Anspruch 1, **dadurch gekennzeichnet,** daß der Stützkörper (14) in seiner Grundform zylindrisch ausgebildet ist und form- und/oder kraftschlüssig in eine Bohrung des Getriebegehäuses (13) eingesetzt ist.

3. Elektromotorischer Möbelantrieb nach Anspruch 1 oder 2, **dadurch gekennzeichnet,** daß die Außenkontur des Stützkörpers (14) konisch ausgebildet ist, wobei der größte Durchmesser dem Motor (12) zugewandt liegt.

4. Elektromotorischer Möbelantrieb nach einem oder mehreren der vorhergehenden Ansprüche 1 bis 3, **dadurch gekennzeichnet,** daß der Stützkörper (14) an dem dem Motor (12) zugewandten Endbereich mit mehreren Längsschlitzen (15) und mit einer äußeren Umfangsnut für einen Federring (16) versehen ist.

5. Elektromotorischer Möbelantrieb nach einem oder mehreren der vorhergehenden Ansprüche 1 bis 4, **dadurch gekennzeichnet,** daß der Stützkörper aus einem Kunststoff im Spritzgießverfahren hergestellt ist.
